# EUROPEAN PATENT SPECIFICATION

(11) **EP 4 460 664 B1**
(45) Date of publication and mention of the grant of the patent: **19.11.2025**
(21) Application number: 22840743.3
(22) Date of filing: 21.12.2022
(51) Int. Cl.: F24F 1/0035, F24F 12/00, F24F 5/00

(54) **AN APPARATUS FOR TEMPERATURE REGULATION IN A BUILDING AND A VENTILATION SYSTEM AND A METHOD WITH SUCH APPARATUS**
VORRICHTUNG ZUR TEMPERATURREGELUNG IN EINEM GEBÄUDE UND BELÜFTUNGSSYSTEM UND VERFAHREN MIT EINER SOLCHEN VORRICHTUNG
APPAREIL DE RÉGULATION DE LA TEMPÉRATURE DANS UN BÂTIMENT ET SYSTÈME DE VENTILATION ET PROCÉDÉ COMPORTANT UN TEL APPAREIL

(30) Priority: 05.01.2022 EP 22150287
(43) Date of publication of application: 13.11.2024
(73) Proprietor: Syddansk Universitet, 5230 Odense M (DK)
(72) Inventor: RASMUSSEN, Mads Høi, 5230 Odense M (DK)
(74) Representative: Høiberg P/S
(86) International application number: PCT/EP2022/087189
(87) International publication number: WO 2023/131532

(56) References cited:
- WO-A1-2013/019113
- CN-A- 112 204 201
- KR-B1- 101 158 676
- US-A1- 2017 321 912
- US-B2- 9 719 688

## Description

### FIELD OF THE INVENTION

The present invention relates to a heat exchanger apparatus for temperature regulation in a building and a hybrid ventilation system and a method of temperature regulation in a building with such apparatus.

### BACKGROUND OF THE INVENTION

In the art it is known to use phase change materials (PCM) in systems for temperature regulation in a room in a building.

A phase change material (PCM) is a substance which releases/absorbs sufficient energy at phase transition to provide useful heat/cooling. Generally the transition will be from one of the first two fundamental states of matter - solid and liquid - to the other. By melting and solidifying at the phase change temperature (PCT), a PCM is capable of storing and releasing large amounts of energy compared to sensible heat storage. Heat is absorbed or released when the material changes from solid to liquid and vice versa or when the internal structure of the material changes; PCMs are accordingly referred to as latent heat storage (LHS) materials.

WO 2013/019113 A1 discloses a climate system for buildings and comprises heat storage with a heat exchanger assembly comprising a plurality of plate shaped phase change material (PCM) units. In the system air flows through a channel wherein a heat exchanger unit is mounted. This unit comprise a series of PCM units, and in some embodiments disclosed in WO 2013/019113 A1, the plurality of PCM units are assembled as a box-like unit and mounted in an inclined configuration in the channel with an angle between 5 and 45 degrees with respect to the incoming air direction.

WO 2013/191554 A2 discloses a container for PCM, a PCM unit and PCM module having a series of PCM units and a climate system comprising a PCM module. The PCM units are arranged such that the incoming air flow is directed around the PCM units in a particular way.

WO 2010/092391 A1 discloses a fluid conditioning arrangement with PCM modules for ambient temperature control in buildings.

KR 101 158 676 B1 discloses an apparatus for temperature regulation in a building, comprising a housing accommodating an inlet section receiving an airflow in a first direction, and an outlet section with a heat exchange section therebetween.

A large amount of electricity is consumed for temperature regulation of buildings around the world, either for heating the building or ventilating and cooling the building. The concept of utilising PCM based systems are known, so that energy can be stored and used for cooling the building without using electricity. However, these known systems are found to be bulky in design and somewhat inefficient and may be difficult to maintain.

It is an object of the present invention to provide an improvement of the prior art PCM heat exchangers.

It is further an object to provide a hybrid cooling system using such PCM heat exchanger.

### SUMMARY OF THE INVENTION

The invention comprises in a first aspect an apparatus for temperature regulation in a building, comprising a housing accommodating an inlet section receiving an airflow in a first direction, and an outlet section with a heat exchange section therebetween, wherein said inlet section is provided in a first side of the housing, where the inlet section has a wedge-shaped inlet channel having a wide opening at an air inlet and a gradually narrowing cross-section downstream thereof thereby funneling the air downwards in the inlet section, and wherein said inlet channel is provided with a side-opening towards the heat exchange section, and said heat exchange section comprises a plurality of plate-shaped phase change material (PCM) modules mounted in an inclined stacked formation so that a series of air channels extending from the inlet section to the outlet section are formed between the PCM modules and so that the airflow is gradually redirected from the inlet section and into the air channels of the heat exchange section, whereby the airflow is subjected to the temperature of the PCM modules before exiting the heat exchange section into the outlet section, and said outlet section is a wedge-shaped outlet section provided in a second side of the housing opposite the first side and with a side opening receiving the second air flows from the heat exchange section and directing the air to an outlet channel at the wide end of said wedge-shaped outlet section, and that said wedge-shaped outlet section is pointing in an opposite direction than the wedge-shape of the inlet section.

By the first aspect of the invention there is provided a PCM based cooling system in the form of a heat exchanger with PCM plate modules that has low pressure drop meaning low additional energy consumption used to guide the air through the heat exchanger. The heat exchanger has very even airflow offering a system that provide effective cooling until all energy stored in the PCM plate modules is dispatched and that the energy is dispatched essentially simultaneous for all the PCM plate modules. The heat exchanger has a space-saving compact design allows for easy integration and has a modular design that can fit small and large buildings easily. Moreover, it has fine serviceability which allows for easy cleaning of the PCM containers/plate modules.

During the day outside air of an elevated temperature relative to the phase change temperature (PCT) of the PCM modules may be drawn into the apparatus and cooled before entering the building by melting the PCM of the plate modules. During the night, where the outside temperature is lower than the PCT and then the PCM modules heats up the incoming air to near the phase change temperature as the PCM solidifies.

The inlet channel has an inclination angle β, which is preferably between 3° and 25°. The most suitable angle β depends on the size of the heat exchanger apparatus, particularly the proportions thereof. This angle is particularly selected in order to ensure an evenly distributed airflow through all of the PCM plate modules so that all PCM models are exposed to the airflow evenly and thus changes their phase simultaneously.

Preferably, the air channels between the PCM plates are substantially parallel and providing an airflow in a direction substantially perpendicular to the first airflow direction of the inlet. This ensures a compact design of the apparatus and a satisfying airflow through the heat exchanger section of the apparatus. Similarly, it is advantageous that also the outlet section is wedge-shaped with the outlet channel at the wide end of said wedge-shaped outlet section, and where the outlet section has an inclination angle β, and preferably β being between 3° and 25°, i.e. preferably the same wedge angle β as the inlet section. This allows for a very compact design of the heat exchanger apparatus as well as a design that ensures a good airflow through the heat exchanger. In a particular embodiment, the airflow out of the outlet section is substantially in the second airflow direction, and preferably substantially horizontal whereas the first inlet airflow is substantially vertically downwards. Hereby, the compact design is achieved with a good and even air distribution through the PCM plate modules.

Preferably an air flow generator, such as an air blower, is provided for controlling an airflow into the inlet channel. This air flow generator may be provided upstream the air inlet section for providing an airflow into the inlet channel. Alternatively, the air flow generator may be provided downstream the outlet section for providing an airflow into the inlet channel.

Advantageously, the air flow generator is capable of reversing the airflow through the heat exchanger. Hereby, the PCM modules may be "recharged" by forcing a reverse airflow through the PCM heat exchanger section where the air is either cooler or hotter than the PCT of the PCM modules.

Advantageously, the plate-shaped phase change material (PCM) modules are provided in parallel in the stacked formation. Hereby, a compact apparatus can be achieved.

In a preferable embodiment, the apparatus is accommodated in a box-shaped housing and wherein the plurality of plate-shaped phase change material (PCM) modules are mounted in an inclined stacked formation with a shape of a parallelogram. Hereby, a particularly compact design of the PCM heat exchanger apparatus is achieved.

Preferably, the plate-shaped phase change material (PCM) modules are provided with circumferential rims and are accommodated in a rack, where the side of the inlet section and the side of the outlet section are provided with rail supports for receiving the rims of the PCM modules. This design allows for a particularly service-friendly heat exchanger apparatus.

Preferably, the housing is provided with side covers that retain the plate-shaped PCM modules in said rack and provides an airtight seal between the plate-shaped PCM modules. Hereby the "false" airflows to the side of the plates are prevented and a design allowing for a particularly easy service and maintenance of the plate modules in the rack is provided.

In some preferred embodiments, the phase change material of the PCM modules is adapted for phase change at 10°-25° Celsius. The particular temperature for the phase change, the phase change temperature (PCT) may be chosen in accordance with the specific requirements for the climate in the building in which the heat exchange system is to be installed. Since the phase change temperature is material specific, accordingly the specific material in the PCM plate modules is also to be chosen for the specific use of the heat exchanger.

In a second aspect of the invention, there is provided a hybrid PCM-A/C ventilation. In this aspect, the invention discloses a ventilation system for temperature regulation in a building or at least a section of the building, said system comprising a phase change material (PCM) based heat exchanger apparatus as disclosed in relation to the first aspect, and which comprises PCM modules for receiving an incoming airflow wherein the incoming airflow is subjected to the temperature of the PCM modules to cool the airflow; an electrically powered air conditioning (A/C) system for optionally providing further cooling of at least the cooled supply air to a lower third temperature before reintroducing the air to the building section; and wherein a by-pass flow passage is provided adapted for the A/C system to receive a by-pass airflow of supply air, which is by-passed the PCM heat exchanger apparatus in addition to the cooled supply air from the PCM heat exchanger apparatus.

By providing the PCM based cooling system in in series with a traditional A/C system, a significant saving in the electricity consumption for cooling and heating a building may be achieved. Only when the cooling power is insufficient from the PCM heat exchanger, the A/C may be turned on. Hereby a significant saving of electrical power may be achieved.

Advantageously, the system further comprises a control unit for controlling the temperatures and the airflows of the PCM heat exchanger as well as controlling the A/C system. By controlling the airflows a precise temperature regulation may be achieved, In particular, by controlling the airflows so that only a partial airflow is exposed to the cooling of the PCM heat exchanger apparatus, and a by-pass airflow circumvents the PCM cooling, the system may also provide a temperature regulation below the temperature of the incoming outside air but above the phase change temperature of the PCM heat exchanger apparatus.

In one embodiment of the second aspect of the invention, the system further comprises a first temperature regulation unit for receiving an incoming outdoor airflow and extract airflow from the building, and wherein said air flows are mixed and thereby subjected to a first temperature regulation in accordance with a predetermined room temperature to produce a supply airflow with an intermediate temperature, and an exhaust airflow; and a second temperature regulation unit adapted for receiving the supply airflow, wherein said second temperature regulation unit is the PCM based heat exchanger apparatus. This may provide temperature regulation reusing extracted air from the building to pre-heat or cool the incoming air prior to the PCM heat exchanger system and/or the A/C system.

Associated with the second aspect, the invention also comprise a third aspect of the invention where there is provided a method of regulating the temperature in a building or at least a section of the building, wherein an incoming airflow, which at least in a partial airflow is supplied to a PCM based heat exchanger subjecting the airflow to a temperature regulation, such as cooling; and then feeding at least a portion of the airflow to an electrically powered air conditioning system for a third temperature regulation before reintroducing the air to the building section, and whereby a by-pass flow passage is provided so that a by-pass airflow of supply air may be received, which is by-passed the PCM heat exchanger apparatus in addition to the cooled supply air from the PCM heat exchanger apparatus.

### BRIEF DESCRIPTION OF THE FIGURES

In the following the invention is described in more detail with reference to the accompanying drawings, in which:
Figure 1 is a schematic side view of a heat exchanger apparatus according to an embodiment of the invention;
Figure 2 is a perspective view of same with side cover removed;
Figure 3 is a detailed view of the mounting of the PCM plate modules in the heat exchanger apparatus of fig. 1;
Figure 4 is a schematic illustration of a ventilation system according to an embodiment of the invention, and
Figure 5 is a schematic illustration of another embodiment of a ventilation system according to the invention.

### DETAILED DESCRIPTION OF AN EMBODIMENT

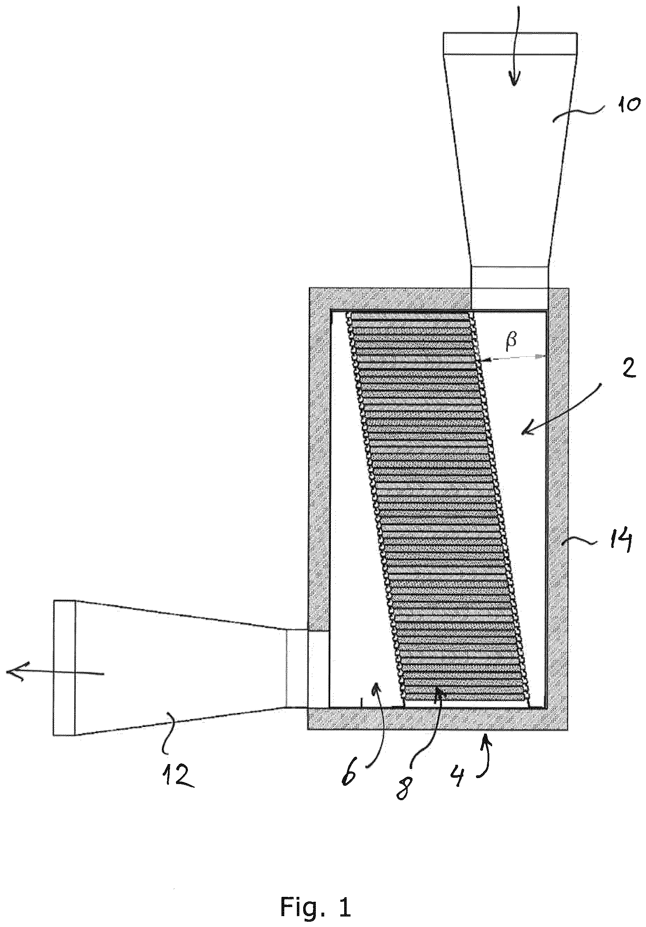

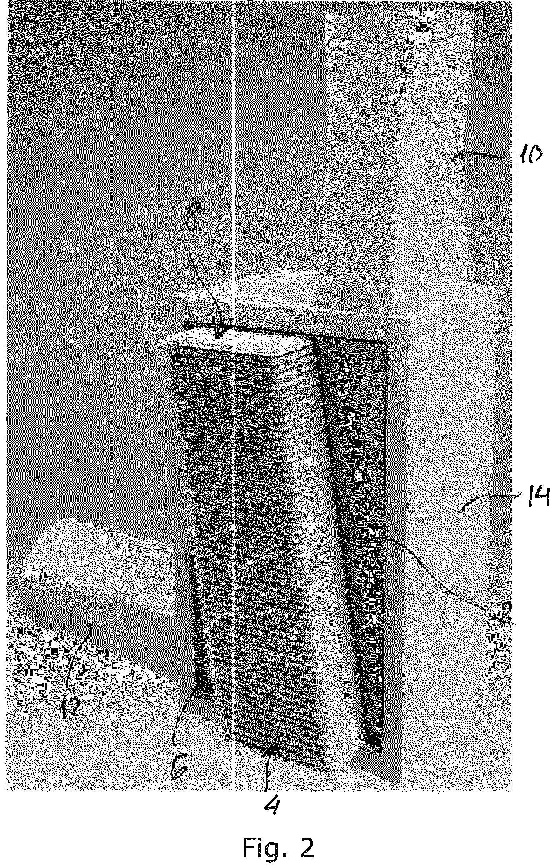

With reference to figures 1-3, an apparatus for temperature regulation in a building according to an embodiment of the invention is shown. The apparatus comprises an inlet section 2 receiving an airflow of incoming air in a first direction, and an outlet section 6 with a heat exchange section 4 there between. These sections - i.e. the inlet 2, heat exchanger 4 and outlet 6 - are arranged in a housing 14, which has a compact box shape (see fig. 2). On the top of the housing 14 there is provided an air inlet 10 guiding the incoming air into the inlet section 2, which has a wedge-shaped inlet channel having a wide opening at an air inlet 10 and a gradually narrowing cross-section downstream thereof. The inlet channel 2 is provided with a side-opening towards the heat exchange section 4.

The heat exchange section 4 comprises a plurality of plate-shaped phase change material (PCM) modules 8 mounted in a stacked formation forming a series of air channels 40 between said PCM modules extending from the inlet section to the outlet section are formed between the PCM modules and so that the airflow is gradually redirected from the inlet section and into the air channels of the heat exchange section, whereby the airflow is subjected to the temperature of the PCM modules before exiting the heat exchange section into the outlet section.

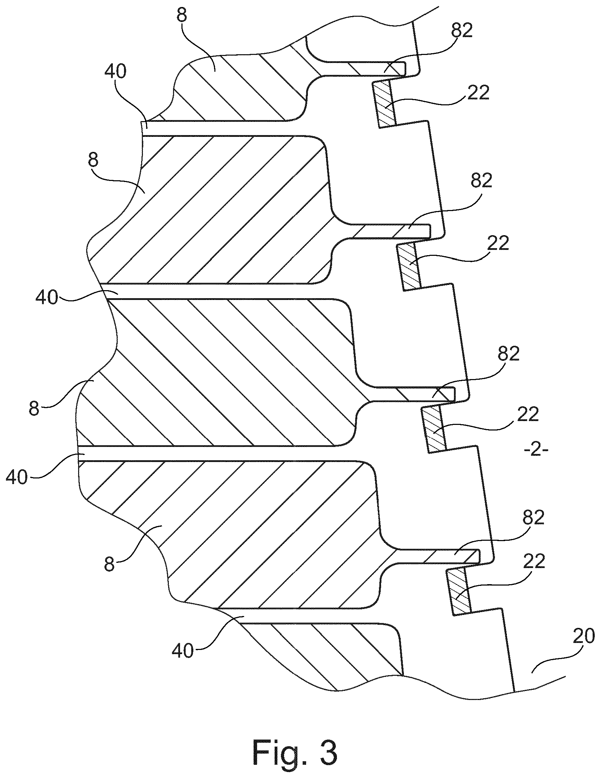

As shown in fig. 3, the plate-shaped phase change material (PCM) modules 8 are provided with circumferential rims 82 and are accommodated in a rack 20 formed at the side of the inlet section 2 and at the side of the outlet section (not shown in fig. 3). The rack 20 comprises rail supports 22 for receiving the rims 82 of the PCM modules 8 so that the PCM modules 8 are accommodated with air channels 40 between the modules 8 in the stack. As shown in the figures, the air channels 40 between the PCM plate modules 8 are substantially parallel and providing an airflow in a direction substantially perpendicular to the first airflow direction of the inlet 2.

As shown in the figures, the plurality of plate-shaped phase change material (PCM) modules 8 are mounted in an inclined stacked formation with a shape of a parallelogram. Hereby, a particularly compact design of the PCM heat exchanger apparatus is achieved as the wedge-shaped inlet section 2 and outlet section 6 together with the parallelogram-shaped heat exchanger section form the compact rectangular box-shape.

The inlet section and the outlet section are wedge-shaped with an inclination angle β, which is preferably between 3° and 25° depending on the overall size of the heat exchanger apparatus. The inlet section 2 acts as a manifold and the angle β is particularly selected in order to ensure an evenly distributed airflow through all of the air channels 40 between the PCM plate modules 8 so that all PCM modules are exposed to the airflow evenly and thus exposed to air temperature evenly so that they all change their phase substantially simultaneously. Thus design prevents an uneven temperature distribution along the PCM modules 8, which is to be avoided as otherwise a heated PCM modules 8 may heat neighbouring PCM modules 8 and cause the PCM modules to undergo a phase change and thereby deteriorate the overall cooling effect of the heat exchanger.

As mentioned above, the housing 14 is provided with side covers at least on one side, but preferably on each side (not shown). The side cover retains the plate-shaped PCM modules 8 in said rack and provides an airtight seal between the plate-shaped PCM modules 8. As indicated in fig. 2, the plate modules 8 can slide in the rack so that the modules 8 are easy to place in the rack and easy to remove for service or replacement.

All of the PCM plate modules 8 can thus easily be exchanged for instance if the heat exchanger is to be configured for a specific temperature. The phase change material of the PCM modules has a specific phase change temperature (PCT). By the invention it is currently preferred that the modules are adapted for undergoing a phase change at 10°-25° Celsius. The particular temperature for the phase change, the phase change temperature (PCT) may be chosen in accordance with the specific requirements for the climate in the building in which the heat exchange system is to be installed. Since the phase change temperature is material specific, accordingly the specific material in the PCM plate modules is also to be chosen for the specific use of the heat exchanger.

An air flow generator, such as an air blower, is provided for controlling an airflow into the inlet channel 2. This air flow generator may be provided upstream the air inlet section 2 in the inlet duct 10 for providing an airflow into the inlet channel 2. Alternatively or additionally, the air flow generator may be provided downstream the outlet section 6 in an outlet duct 12 for providing an airflow through the heat exchanger apparatus.

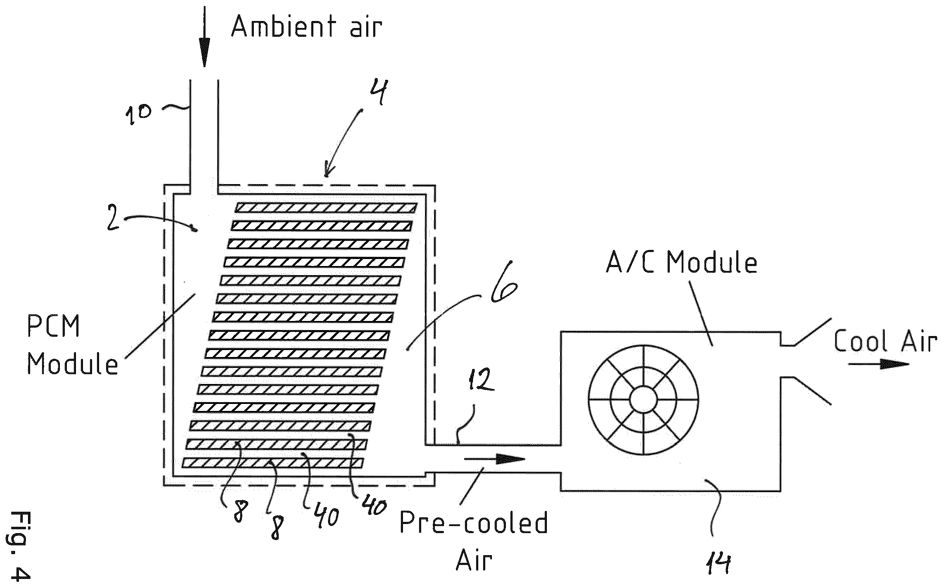

In figure 4, there is shown a hybrid PCM-A/C ventilation. The ventilation system comprises a phase change material (PCM) based heat exchanger apparatus as described above with reference to the figures 1-3 and an air-conditioning unit 14.

Incoming ambient air flows through the inlet duct 10 and into the inlet section 2 of the heat exchanger. The air is then distributed so there is a substantially even airflow through the air channels 40 formed by the stacked PCM plate modules 8 of the heat exchanger section 4. The airflows of the air channels 40 are then collected in the outlet section 6 and a pre-cooled airflow exits the PCM heat exchanger apparatus through the outlet duct 12. The pre-cooled air is then fed through an air-conditioning unit 14 where the air can be cooled further if necessary so that cool air is produced which is led into the building structure which is to be temperature regulated.

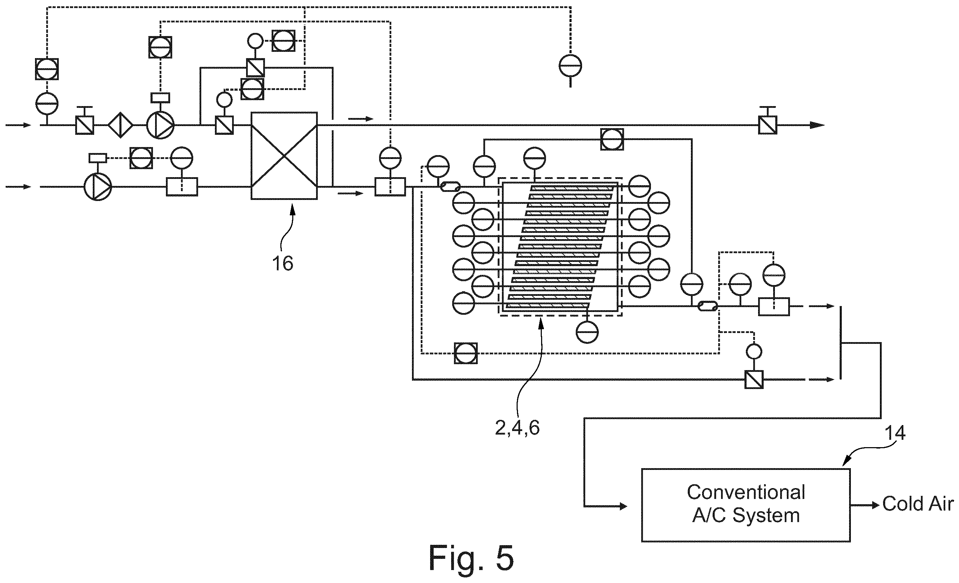

With reference to fig. 5, a by-pass flow passage may further be provided adapted for the A/C system to receive a by-pass airflow of supply air, which is by-passed the PCM heat exchanger apparatus in addition to the cooled supply air from the PCM heat exchanger apparatus.

By providing the PCM based cooling system in in series with a traditional A/C system, a significant saving in the electricity consumption for cooling and heating a building may be achieved. Only when the cooling power is insufficient from the PCM heat exchanger, the A/C may be turned on. Hereby a significant saving of electrical power may be achieved.

Advantageously, the system further comprises a control unit for controlling the temperatures and the airflows of the PCM heat exchanger as well as controlling the A/C system. By controlling the airflows a precise temperature regulation may be achieved, In particular, by controlling the airflows so that only a partial airflow is exposed to the cooling of the PCM heat exchanger apparatus, and a by-pass airflow circumvents the PCM cooling, the system may also provide a temperature regulation below the temperature of the incoming outside air but above the phase change temperature of the PCM heat exchanger apparatus.

As shown in fig. 5, the system further comprises a first temperature regulation unit 16 for receiving an incoming outdoor airflow and extract airflow from the building. These airflows are mixed and thereby subjected to a first temperature regulation in accordance with a predetermined room temperature to produce a supply airflow with an intermediate temperature, and an exhaust airflow. The PCM based heat exchanger apparatus may then act as a second temperature regulation unit adapted for receiving the supply airflow. This may provide temperature regulation reusing extracted air from the building to pre-heat or cool the incoming air prior to the PCM heat exchanger system and/or the A/C system.

Above, the invention is described with reference to some currently preferred embodiments. However, by the invention it is realised that other embodiments and variants may be provided without departing from the scope of the invention as defined in the accompanying claims.

Thus, although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An apparatus for temperature regulation in a building, comprising a housing (14) accommodating an inlet section (2) receiving an airflow in a first direction, and an outlet section (6) with a heat exchange section (4) therebetween, wherein
said inlet section (2) is provided in a first side of the housing (14), where the inlet section (2) has a wedge-shaped inlet channel having a wide opening at an air inlet (10) and a gradually narrowing cross-section downstream thereof thereby funneling the air downwards in the inlet section (2), and wherein said inlet channel is provided with a side-opening towards the heat exchange section (4), and
said heat exchange section (4) comprises a plurality of plate-shaped phase change material (PCM) modules (8) mounted in an inclined stacked formation so that a series of air channels (40) extending from the inlet section (2) to the outlet section (6) are formed between the PCM modules (8) and so that the airflow is gradually redirected from the inlet section (2) and into the air channels (40) of the heat exchange section (4), whereby the airflow is subjected to the temperature of the PCM modules (8) before exiting the heat exchange section (4) into the outlet section (6), and
said outlet section (6) is a wedge-shaped outlet section (6) provided in a second side of the housing (14) opposite the first side and with a side opening receiving the second air flows from the heat exchange section (4) and directing the air to an outlet channel (12) at the wide end of said wedge-shaped outlet section (6), and that said wedge-shaped outlet section (6) is pointing in an opposite direction than the wedge-shape of the inlet section (2).

2. An apparatus according to claim 1, wherein the inlet channel has an inclination angle β, preferably β being between 3° and 25°, and the outlet section (6) has an inclination angle β, preferably β being between 3° and 25°, and wherein the wedge inclination angle β of the inlet (2) and outlet sections (6) is substantially the same.

3. An apparatus according to claim 1 or 2, wherein the air channels (40) between the PCM plates (8) are substantially parallel and providing an airflow in a second direction substantially perpendicular to the first airflow direction of the inlet.

4. An apparatus according to any of the preceding claims, wherein the airflow out of the outlet section (6) is substantially in the second airflow direction, and preferably substantially horizontal whereas the first inlet airflow is substantially vertically downwards.

5. An apparatus according to any of the preceding claims, wherein an air flow generator, such as an air blower, is provided for controlling an airflow into the inlet channel, and wherein the air flow generator is preferably provided upstream the air inlet section (2) or downstream the outlet section (6).

6. An apparatus according to any of the preceding claims, wherein the plate-shaped phase change material (PCM) modules (8) are provided in parallel in the stacked formation.

7. An apparatus according to any of the preceding claims, wherein the apparatus is accommodated in a box-shaped housing (14) and wherein the plurality of plate-shaped phase change material (PCM) modules (8) are mounted in the inclined stacked formation with a shape of a parallelogram.

8. An apparatus according to any of the preceding claims, wherein the plate-shaped phase change material (PCM) modules (8) are provided with circumferential rims (82) and are accommodated in a rack (20), where the side of the inlet section (2) and the side of the outlet section (6) are provided with rail supports (22) for receiving the rims (82) of the PCM modules (8).

9. An apparatus according to claim 8, wherein the housing (14) is provided with side covers that retain the plate-shaped PCM modules (8) in said rack (20) and provides an airtight seal between the plate-shaped PCM modules (8).

10. An apparatus according to any of the preceding claims, wherein the phase change material of the PCM modules (8) is adapted for phase change at 10°-25° Celsius.

11. A ventilation system for temperature regulation in a building or at least a section of the building, said system comprising
a phase change material (PCM) based heat exchanger apparatus according to any one of the preceding claims, said apparatus comprising PCM modules (8) for receiving an incoming airflow wherein the incoming airflow is subjected to the temperature of the PCM modules (8) to cool the airflow; and
an electrically powered air conditioning (A/C) system for optionally providing further cooling of at least the cooled supply air to a lower third temperature before reintroducing the air to the building section;
wherein a by-pass flow passage is provided adapted for the A/C system to receive a by-pass airflow of supply air, which is by-passed the PCM heat exchanger apparatus in addition to the cooled supply air from the PCM heat exchanger apparatus;
wherein, potentially, the ventilation system further comprises a control unit (16) for controlling the temperatures and the airflows of the PCM heat exchanger as well as controlling the A/C system; and
wherein, potentially, the ventilation system further comprises
a first temperature regulation unit (16) for receiving an incoming outdoor airflow and extract airflow from the building, and wherein said air flows are mixed and thereby subjected to a first temperature regulation in accordance with a predetermined room temperature to produce a supply airflow with an intermediate temperature, and an exhaust airflow; and
a second temperature regulation unit adapted for receiving the supply airflow, wherein said second temperature regulation unit is the PCM based heat exchanger apparatus.

12. A ventilation system according to claim 11, wherein the ventilation system comprises a first temperature regulation unit (16) and a second temperature regulation unit, and wherein the second temperature regulation unit is an apparatus according to any of the claims 1-10.

13. A method of regulating the temperature in a building or at least a section of the building, wherein an incoming airflow, which at least in a partial airflow is supplied to a PCM based heat exchanger apparatus according to any one of claims 1 to 10, thereby subjecting the airflow to a temperature regulation, such as cooling; and then feeding at least a portion of the airflow to an electrically powered air conditioning system for a third temperature regulation before reintroducing the air to the building section, and whereby a by-pass flow passage is provided so that a by-pass airflow of supply air may be received, which is by-passed the PCM heat exchanger apparatus in addition to the cooled supply air from the PCM heat exchanger apparatus.

14. A method according to claim 13, wherein the incoming airflow is an airflow of outdoor air and an airflow of extract air from the building, which are mixed and thereby subjected to an initial temperature regulation in accordance with a predetermined room temperature to produce the airflow, which at least in a partial airflow is supplied to the PCM based heat exchanger.

15. A method according to claim 13 or 14, whereby the method is performed by a ventilation system according to any one of claims 11 or 12.

## Patentansprüche

1. Vorrichtung zur Temperaturregelung in einem Gebäude, umfassend ein Gehäuse (14), das einen Einlassabschnitt (2), der einen Luftstrom in einer ersten Richtung aufnimmt, und einen Auslassabschnitt (6) mit einem dazwischen liegenden Wärmeaustauschabschnitt (4) unterbringt, wobei
der Einlassabschnitt (2) in einer ersten Seite des Gehäuses (14) bereitgestellt ist, wo der Einlassabschnitt (2) einen keilförmigen Einlasskanal aufweist, aufweisend eine breite Öffnung an einem Lufteinlass (10) und einen sich stromabwärts davon allmählich verengenden Querschnitt, wodurch die Luft in dem Einlassabschnitt (2) nach unten geleitet wird, und wobei der Einlasskanal mit einer Seitenöffnung hinführend zu dem Wärmeaustauschabschnitt (4) bereitgestellt ist, und
der Wärmeaustauschabschnitt (4) eine Vielzahl von plattenförmigen Phasenwechselmaterial-(PCM-)Modulen (8) umfasst, die in einer geneigten gestapelten Anordnung derart montiert sind, dass eine Reihe von Luftkanälen (40), die sich von dem Einlassabschnitt (2) zu dem Auslassabschnitt (6) erstrecken, zwischen den PCM-Modulen (8) gebildet wird, und derart, dass der Luftstrom allmählich von dem Einlassabschnitt (2) und in die Luftkanäle (40) des Wärmeaustauschabschnitts (4) umgelenkt wird, wodurch der Luftstrom der Temperatur der PCM-Module (8) ausgesetzt wird, bevor er den Wärmetauschabschnitt (4) in den Auslassabschnitt (6) verlässt, und
der Auslassabschnitt (6) ein keilförmiger Auslassabschnitt (6) ist, der in einer zweiten Seite des Gehäuses (14) der ersten Seite entgegengesetzt und mit einer Seitenöffnung bereitgestellt ist, die die zweiten Luftströme aus dem Wärmetauschabschnitt (4) aufnimmt und die Luft zu einem Auslasskanal (12) an dem breiten Ende des keilförmigen Auslassabschnitts (6) leitet, und dass der keilförmige Auslassabschnitt (6) in eine entgegengesetzte Richtung als die Keilform des Einlassabschnitts (2) weist.

2. Vorrichtung nach Anspruch 1, wobei der Einlasskanal einen Neigungswinkel β aufweist, der vorzugsweise zwischen 3° und 25° ist, und der Auslassabschnitt (6) einen Neigungswinkel β aufweist, der vorzugsweise zwischen 3° und 25° ist, und wobei der Keilneigungswinkel β des Einlass- (2) und des Auslassabschnitts (6) im Wesentlichen gleich ist.

3. Vorrichtung nach Anspruch 1 oder 2, wobei die Luftkanäle (40) zwischen den PCM-Platten (8) im Wesentlichen parallel sind und einen Luftstrom in einer zweiten Richtung im Wesentlichen senkrecht zu der ersten Luftströmungsrichtung des Einlasses bereitstellen.

4. Vorrichtung nach einem der vorhergehenden Ansprüche, wobei der Luftstrom aus dem Auslassabschnitt (6) im Wesentlichen in der zweiten Luftströmungsrichtung und vorzugsweise im Wesentlichen horizontal ist, während der erste Einlassluftstrom im Wesentlichen vertikal nach unten gerichtet ist.

5. Vorrichtung nach einem der vorhergehenden Ansprüche, wobei ein Luftstromgenerator, wie etwa ein Luftgebläse, bereitgestellt ist, um einen Luftstrom in den Einlasskanal zu steuern, und wobei der Luftstromgenerator vorzugsweise stromaufwärts des Lufteinlassabschnitts (2) oder stromabwärts des Auslassabschnitts (6) bereitgestellt ist.

6. Vorrichtung nach einem der vorhergehenden Ansprüche, wobei die plattenförmigen Phasenwechselmaterial-(PCM-)Module (8) parallel in der gestapelten Anordnung bereitgestellt sind.

7. Vorrichtung nach einem der vorhergehenden Ansprüche, wobei die Vorrichtung in einem kastenförmigen Gehäuse (14) untergebracht ist und wobei die Vielzahl von plattenförmigen Phasenwechselmaterial-(PCM)-Modulen (8) in einer Form eines Parallelogramms in der geneigten gestapelten Anordnung montiert ist.

8. Vorrichtung nach einem der vorhergehenden Ansprüche, wobei die plattenförmigen Phasenwechselmaterial-(PCM-)Module (8) mit Umfangsrändern (82) bereitgestellt sind und in einem Gestell (20) untergebracht sind, wobei die Seite des Einlassabschnitts (2) und die Seite des Auslassabschnitts (6) mit Schienenauflagen (22) zum Aufnehmen der Ränder (82) der PCM-Module (8) bereitgestellt sind.

9. Vorrichtung nach Anspruch 8, wobei das Gehäuse (14) mit seitlichen Abdeckungen bereitgestellt ist, die die plattenförmigen PCM-Module (8) in dem Gestell (20) halten, und eine luftdichte Abdichtung zwischen den plattenförmigen PCM-Modulen (8) bereitstellt.

10. Vorrichtung nach einem der vorhergehenden Ansprüche, wobei das Phasenwechselmaterial der PCM-Module (8) für einen Phasenwechsel bei 10°-25° Celsius ausgelegt ist.

11. Belüftungssystem zur Temperaturregelung in einem Gebäude oder mindestens eines Gebäudeabschnitts, wobei das System Folgendes umfasst
eine auf einem Phasenwechselmaterial (PCM) basierende Wärmetauschervorrichtung nach einem der vorhergehenden Ansprüche, wobei die Vorrichtung PCM-Module (8) zum Aufnehmen eines einströmenden Luftstroms umfasst, wobei der einströmende Luftstrom der Temperatur der PCM-Module (8) ausgesetzt wird, um den Luftstrom zu kühlen; und
eine elektrisch betriebene Klimaanlage (A/C), um optional weiteres Kühlen zumindest der gekühlten Zuluft auf eine niedrigere dritte Temperatur bereitzustellen, bevor die Luft wieder in den Gebäudeabschnitt eingeleitet wird;
wobei ein Bypass-Strömungsdurchgang bereitgestellt ist, der derart ausgelegt ist, dass die A/C-Anlage einen Bypass-Luftstrom von Zuluft aufnimmt, der an der PCM-Wärmetauschervorrichtung vorbeigeleitet wird, zusätzlich zu der gekühlten Zuluft von der PCM-Wärmetauschervorrichtung;
wobei das Belüftungssystem potenziell ferner eine Steuereinheit (16) umfasst, um die Temperaturen und die Luftströme des PCM-Wärmetauschers zu steuern sowie die A/C-Anlage zu steuern; und wobei das Belüftungssystem potenziell ferner Folgendes umfasst eine erste Temperaturregelungseinheit (16) zum Aufnehmen eines einströmenden Außenluftstroms und Abluftstroms aus dem Gebäude, und wobei diese Luftströme gemischt werden und dadurch einer ersten Temperaturregelung gemäß einer vorbestimmten Raumtemperatur unterzogen werden, um einen Zuluftstrom mit einer Zwischentemperatur und einen Abluftstrom zu erzeugen; und
eine zweite Temperaturregelungseinheit, die ausgelegt ist, um den Zuluftstrom aufzunehmen, wobei die zweite Temperaturregelungseinheit die PCM-basierte Wärmetauschervorrichtung ist.

12. Belüftungssystem nach Anspruch 11, wobei das Belüftungssystem eine erste Temperaturregelungseinheit (16) und eine zweite Temperaturregelungseinheit umfasst, und wobei die zweite Temperaturregelungseinheit eine Vorrichtung nach einem der Ansprüche 1-10 ist.

13. Verfahren zur Regelung der Temperatur in einem Gebäude oder zumindest einem Gebäudeabschnitt, wobei ein einströmender Luftstrom, der zumindest in einem Teilluftstrom einer PCM-basierten Wärmetauschervorrichtung nach einem der Ansprüche 1 bis 10 zugeführt wird, wodurch der Luftstrom einer Temperaturregelung, wie etwa einer Kühlung, unterzogen wird; und dann zumindest ein Teil des Luftstroms einer elektrisch betriebenen Klimaanlage für eine dritte Temperaturregelung zugeführt wird, bevor die Luft wieder in den Gebäudeabschnitt eingeleitet wird, und wodurch ein Bypass-Strömungsdurchgang derart bereitgestellt wird, dass ein Bypass-Luftstrom von Zuluft aufgenommen werden kann, der zusätzlich zu der gekühlten Zuluft von der PCM-Wärmetauschervorrichtung an der PCM-Wärmetauschervorrichtung vorbeigeleitet wird.

14. Verfahren nach Anspruch 13, wobei der einströmende Luftstrom ein Luftstrom von Außenluft und ein Luftstrom von Abluft aus dem Gebäude ist, die miteinander gemischt und dadurch einer anfänglichen Temperaturregelung gemäß einer vorbestimmten Raumtemperatur unterzogen werden, um den Luftstrom zu erzeugen, der dem PCM-basierten Wärmetauscher zumindest in einem Teilluftstrom zugeführt wird.

15. Verfahren nach Anspruch 13 oder 14, wobei das Verfahren durch ein Belüftungssystem nach einem der Ansprüche 11 oder 12 durchgeführt wird.

## Revendications

1. Appareil de régulation de la température dans un bâtiment, comprenant un boîtier (14) logeant une section d'entrée (2) recevant un flux d'air dans une première direction, et une section de sortie (6) avec une section d'échange de chaleur (4) entre elles, dans lequel
ladite section d'entrée (2) est prévue dans un premier côté du boîtier (14), la section d'entrée (2) comportant un canal d'entrée en forme de coin présentant une large ouverture au niveau d'une entrée d'air (10) et une section transversale se rétrécissant progressivement en aval de celle-ci, canalisant ainsi l'air vers le bas dans la section d'entrée (2), et ledit canal d'entrée étant pourvu d'une ouverture latérale vers la section d'échange de chaleur (4), et
ladite section d'échange de chaleur (4) comprend une pluralité de modules de matériau à changement de phase (PCM) en forme de plaque (8) montés dans une formation empilée inclinée de sorte qu'une série de canaux d'air (40) s'étendant de la section d'entrée (2) à la section de sortie (6) soient formés entre les modules PCM (8) et de sorte que le flux d'air soit progressivement redirigé de la section d'entrée (2) vers les canaux d'air (40) de la section d'échange de chaleur (4), par quoi le flux d'air est soumis à la température des modules PCM (8) avant de sortir de la section d'échange de chaleur (4) vers la section de sortie (6), et
ladite section de sortie (6) est une section de sortie en forme de coin (6) prévue dans un deuxième côté du boîtier (14) opposé au premier côté et avec une ouverture latérale recevant les deuxièmes flux d'air provenant de la section d'échange de chaleur (4) et dirigeant l'air vers un canal de sortie (12) à l'extrémité large de ladite section de sortie en forme de coin (6), et que ladite section de sortie en forme de coin (6) pointe dans une direction opposée à celle de la forme en coin de la section d'entrée (2).

2. Appareil selon la revendication 1, dans lequel le canal d'entrée présente un angle d'inclinaison β, β étant de préférence compris entre 3° et 25°, et la section de sortie (6) présente un angle d'inclinaison β, β étant de préférence compris entre 3° et 25°, et dans lequel l'angle d'inclinaison de coin β des sections d'entrée (2) et de sortie (6) est sensiblement le même.

3. Appareil selon la revendication 1 ou 2, dans lequel les canaux d'air (40) entre les plaques PCM (8) sont sensiblement parallèles et fournissent un flux d'air dans une deuxième direction sensiblement perpendiculaire à la première direction de flux d'air de l'entrée.

4. Appareil selon l'une quelconque des revendications précédentes, dans lequel le flux d'air sortant de la section de sortie (6) est sensiblement dans la deuxième direction de flux d'air, et de préférence sensiblement horizontal tandis que le premier flux d'air d'entrée est sensiblement verticalement vers le bas.

5. Appareil selon l'une quelconque des revendications précédentes, dans lequel un générateur de flux d'air, tel qu'un ventilateur d'air, est prévu pour contrôler un flux d'air dans le canal d'entrée, et dans lequel le générateur de flux d'air est de préférence prévu en amont de la section d'entrée d'air (2) ou en aval de la section de sortie (6).

6. Appareil selon l'une quelconque des revendications précédentes, dans lequel les modules de matériau à changement de phase (PCM) en forme de plaque (8) sont prévus en parallèle dans la formation empilée.

7. Appareil selon l'une quelconque des revendications précédentes, dans lequel l'appareil est logé dans un boîtier en forme de boîte (14) et dans lequel la pluralité de modules de matériau à changement de phase (PCM) en forme de plaque (8) sont montés dans la formation empilée inclinée avec une forme de parallélogramme.

8. Appareil selon l'une quelconque des revendications précédentes, dans lequel les modules de matériau à changement de phase (PCM) en forme de plaque (8) sont pourvus de rebords circonférentiels (82) et sont logés dans un rack (20), où le côté de la section d'entrée (2) et le côté de la section de sortie (6) sont pourvus de supports de rail (22) pour recevoir les rebords (82) des modules PCM (8).

9. Appareil selon la revendication 8, dans lequel le boîtier (14) est pourvu de couvercles latéraux qui retiennent les modules PCM en forme de plaque (8) dans ledit rack (20) et assurent une étanchéité à l'air parfaite entre les modules PCM en forme de plaque (8).

10. Appareil selon l'une quelconque des revendications précédentes, dans lequel le matériau à changement de phase des modules PCM (8) est adapté pour un changement de phase à 10°-25° Celsius.

11. Système de ventilation pour la régulation de la température dans un bâtiment ou au moins une section du bâtiment, ledit système comprenant
un appareil échangeur de chaleur à base de matériau à changement de phase (PCM) selon l'une quelconque des revendications précédentes, ledit appareil comprenant des modules PCM (8) destinés à recevoir un flux d'air entrant, le flux d'air entrant étant soumis à la température des modules PCM (8) pour refroidir le flux d'air ; et
un système de climatisation (A/C) à alimentation électrique permettant de fournir éventuellement un refroidissement supplémentaire d'au moins l'air d'alimentation refroidi à une troisième température inférieure avant de réintroduire l'air dans la section du bâtiment ;
dans lequel un passage de flux de dérivation est prévu, adapté pour que le système de climatisation reçoive un flux d'air de dérivation d'air d'alimentation, qui est dérivé de l'appareil échangeur de chaleur PCM, en plus de l'air d'alimentation refroidi provenant de l'appareil échangeur de chaleur PCM ; dans lequel, potentiellement, le système de ventilation comprend en outre une unité de commande (16) pour contrôler les températures et les débits d'air de l'échangeur de chaleur PCM ainsi que pour contrôler le système de climatisation ; et
dans lequel, potentiellement, le système de ventilation comprend en outre
une première unité de régulation de température (16) destinée à recevoir un flux d'air extérieur entrant et un flux d'air extrait du bâtiment, et lesdits flux d'air étant mélangés et ainsi soumis à une première régulation de température conformément à une température ambiante prédéterminée pour produire un flux d'air d'alimentation à température intermédiaire, et un flux d'air d'évacuation ; et
une deuxième unité de régulation de température adaptée pour recevoir le flux d'air d'alimentation, ladite deuxième unité de régulation de température étant l'appareil échangeur de chaleur à base de PCM.

12. Système de ventilation selon la revendication 11, dans lequel le système de ventilation comprend une première unité de régulation de température (16) et une deuxième unité de régulation de température, et dans lequel la deuxième unité de régulation de température est un appareil selon l'une quelconque des revendications 1 à 10.

13. Procédé de régulation de la température dans un bâtiment ou au moins une section du bâtiment, dans lequel un flux d'air entrant, qui au moins dans un flux d'air partiel est fourni à un appareil échangeur de chaleur à base de PCM selon l'une quelconque des revendications 1 à 10, soumettant ainsi le flux d'air à une régulation de température, telle qu'un refroidissement ; puis alimentant au moins une partie du flux d'air à un système de climatisation alimenté électriquement pour une troisième régulation de température avant de réintroduire l'air dans la section du bâtiment, et par lequel un passage de flux de dérivation est prévu de sorte qu'un flux d'air de dérivation d'air d'alimentation peut être reçu, qui est dérivé de l'appareil échangeur de chaleur PCM en plus de l'air d'alimentation refroidi provenant de l'appareil échangeur de chaleur PCM.

14. Procédé selon la revendication 13, dans lequel le flux d'air entrant est un flux d'air extérieur et un flux d'air extrait du bâtiment, qui sont mélangés et ainsi soumis à une régulation de température initiale conformément à une température ambiante prédéterminée pour produire le flux d'air, qui au moins dans un flux d'air partiel est fourni à l'échangeur de chaleur à base de PCM.

15. Procédé selon la revendication 13 ou 14, le procédé étant mis en œuvre par un système de ventilation selon l'une quelconque des revendications 11 ou 12.
